# EUROPÄISCHE PATENTSCHRIFT

(11) **EP 1 669 160 B1**
(45) Veröffentlichungstag und Bekanntmachung des Hinweises auf die Patenterteilung: **08.10.2008**
(21) Anmeldenummer: 05405633.8
(22) Anmeldetag: 15.11.2005
(51) Int. Cl.: B23Q 1/38, B23Q 1/58, H02K 41/02, B23Q 5/28

(54) **Positioniervorrichtung mit zwei zueinander geneigten Linearmotoren**
Positioning device with two linear motors inclined relative to each other
Système de positionnement avec deux moteurs linéaires inclinés

(30) Priorität: 08.12.2004 CH 20352004
(43) Veröffentlichungstag der Anmeldung: 14.06.2006
(73) Patentinhaber: Fritz Studer AG, 3612 Steffisburg (CH)
(72) Erfinder: Aeschlimann, Adrian, 3652 Hilterfingen (CH); Zwahlen, Reto, CH-3612 Steffisburg (CH)
(74) Vertreter: AMMANN PATENTANWÄLTE AG BERN

(56) Entgegenhaltungen:
- WO-A-02/33807
- DE-A1- 10 213 408
- DE-A1- 19 643 518
- DE-A1- 19 948 490
- US-A- 6 110 010
- SCHOENFELD J: "HYDROSTATISCHE FUEHRUNGEN FUER LINEARMOTOREN" WERKSTATT UND BETRIEB, CARL HANSER VERLAG. MUNCHEN, DE, Bd. 132, Nr. 3, März 1999 (1999-03), Seiten 6-8, XP000804594 ISSN: 0043-2792

## Beschreibung

Die vorliegende Erfindung bezieht sich auf eine Positioniervorrichtung mit mindestens einem verfahrbaren Schlitten und mindestens einem Linearmotor, gemäss dem Oberbegriff von Anspruch 1 [siehe z.B. "Hydrostatische Führungen für Linearmotoren" von Jochen Schönfeld, Werkstatt und Betrieb, 03-1999].

Derartige Positioniervorrichtungen werden beispielsweise in Werkzeugmaschinen eingesetzt, um das Werkzeug in Bezug auf das zu bearbeitende Werkstück laufend zu positionieren. Die Verwendung eines Linearmotorantriebs hat den Vorteil, dass er berührungslos funktioniert und das Erzeugen von hohen Geschwindigkeiten und Beschleunigungen erlaubt, sodass schnelle Bewegungen des Schlittens möglich sind. Nachteilig ist jedoch, dass zwischen Primär- und Sekundärteil des Linearmotors eine grosse Anzugskraft erzeugt wird, die derart gross sein kann, dass der Schlitten Deformationen unterworfen ist und nicht mehr genügend genau positionierbar ist. Beim Rundschleifen beispielsweise ist ein hochpräzises Positionieren des Werkzeugs mit Genauigkeiten im Submikrometerbereich gefordert (siehe z.B. DE 199 48 490 A1).

Aus der DE 196 43 518 A1 ist eine Positioniervorrichtung mit einem Linearantrieb bekannt, welcher eine horizontal und eine vertikal ausgerichtete Aktiveinheit umfasst. Die Passiveinheiten des Linearantriebs sind an einem Körper mit einem rechteckigen Querschnitt befestigt, welcher mittels eines Luftlagers verschiebbar gelagert ist. Diese Art der Lagerung erfordert jedoch einen relativ aufwändigen Aufbau, da ein Vielzahl von Düsen über die gesamte Fläche der Aktiveinheiten angeordnet werden müssen. Im Weiteren ist die Tragkraft des Luftlagers beschränkt.

Ausgehend von diesem Stand der Technik liegt eine Aufgabe der vorliegenden Erfindung darin, eine Positioniervorrichtung der eingangs erwähnten Art zu schaffen, deren Schlitten in verbessertem Masse schnell und präzise positionierbar ist.

Eine Positioniervorrichtung, die diese Aufgabe löst, ist im Anspruch 1 angegeben. Die weiteren Ansprüche geben bevorzugte Ausführungen sowie eine Schleifmaschine mit einer Positioniervorrichtung an.

Die Erfindung wird im Folgenden anhand eines bevorzugten Ausführungsbeispiels unter Bezugnahme auf Figuren erläutert.

Es zeigen
Fig. 1 eine perspektivische Ansicht der erfindungsgemässen Positioniervorrichtung;
Fig. 2 eine Detailansicht aus Fig. 1;
Fig. 3 eine teilweise geschnittene Detailansicht aus Fig. 1 von vorne; und
Fig. 4 den Schlittenantrieb und die Wegmesseinrichtung der Positioniervorrichtung gemäss Fig. 1.

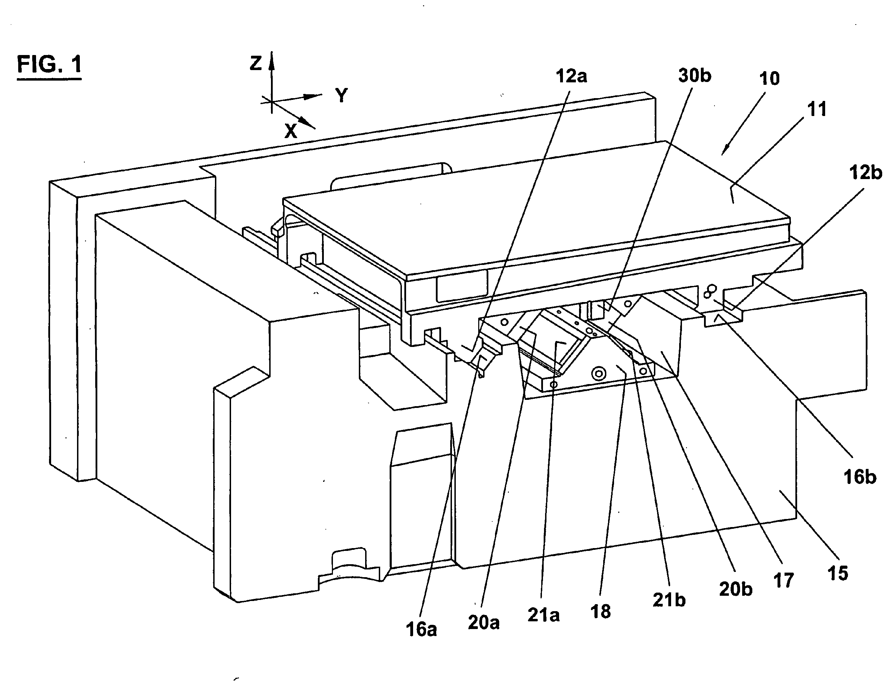

Figur 1 zeigt eine perspektivische Ansicht der Positioniervorrichtung, wobei der besseren Übersicht wegen der vordere Teil des Basisträgers 15 weggelassen ist. Wie ersichtlich, umfasst die Positioniervorrichtung einen Schlitten 10, der entlang dem Basisträger 15 in X-Richtung verfahrbar ist. Der Schlitten 10 enthält eine Grundplatte 11, deren Unterseite mit herausragenden Führungsteilen 12a und 12b versehen ist, die sich in Verfahrrichtung X erstrecken. Der Basisträger 15 enthält Führungsschienen 16a und 16b, in welchem das entsprechende Führungsteil 12a bzw. 12b verfahrbar ist.

Führungsteile 12a, 12b und Führungsschienen 16a, 16b sind durch eine sich dazwischen befindende Flüssigkeit, typischerweise Öl, getrennt. Die Führungen 12a, 16a, 12b, 16b sind als hydrostatische Gleitführungen ausgestaltet, wozu während des Betriebs kontinuierlich Flüssigkeit unter Druck über Zufuhrbohrungen in den Führungsteilen 12a, 12b in den Spalt zwischen den Führungsteilen 12a, 12b und den Führungsschienen 16a, 16b zugeführt wird und sich so ein Film ausbildet, auf welchem der Schlitten 10 "schwebt". Der Druck wird ausserhalb der Führungen 12a, 16a, 12b, 16b durch geeignete Mittel erzeugt und so geregelt, dass die Dicke des Films im Wesentlichen konstant ist.

Die Verwendung von hydrostatischen Führungen hat den Vorteil, dass sie berührungsfrei arbeiten und somit kein Verschleiss auftritt und dass die erzielbaren Verfahrwege hochpräzise sind, selbst bei schnell wechselnder Verfahrrichtung und/oder hoher auf den Schlitten wirkenden Gewichtskraft. Typischerweise sind Verfahrwege kleiner als 1/10 Mikrometer möglich.

Es ist denkbar, hydrodynamische Führungen als flüssigkeitsgelagerte Gleitführungen zu verwenden, wobei hier durch die Relativbewegung zwischen dem jeweiligen Führungsteil 12a, 12b und der entsprechenden Führungsschiene 16a, 16b ein trennender Flüssigkeitsfilm aufgebaut wird.

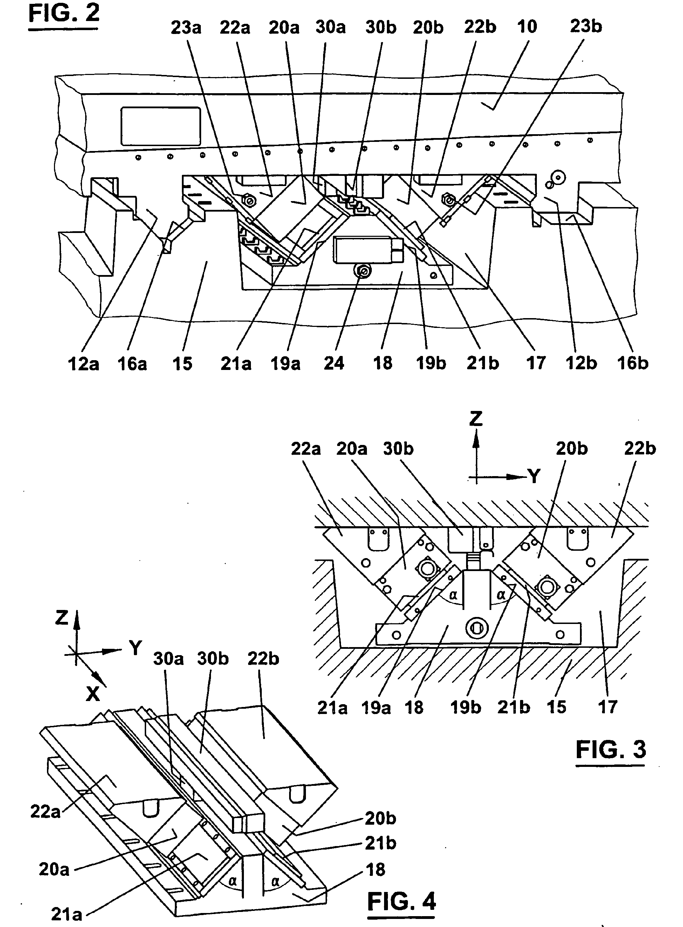

Die Führungen 12a, 16a, 12b, 16b sind als aufliegende Führungen ausgestaltet, d.h. frei von Umgriffen, beispielsweise - wie in Figur 2 gezeigt - in Form einer V-Flachführung. Es ist auch denkbar, beide Führungen 12a, 16a, 12b, 16b als V-Führung oder Flachführung auszubilden.

Wie aus den Figuren 1 und 2 ersichtlich, umfasst der Basisträger 15 zwischen den Führungsschienen 16a, 16b eine sich in Verfahrrichtung X erstreckende Vertiefung 17, in welcher ein Schlittenantrieb angeordnet ist. Dieser umfasst einen Basiskörper 18 und zwei Linearmotoren mit jeweils einem Primärteil 20a bzw. 20b, welches die elektrischen Wicklungen enthält, und jeweils einem Sekundärteil 21a bzw. 21b, welches mit Permanentmagneten versehen ist. Durch geeignetes Speisen der Wicklungen ist ein Wanderfeld erzeugbar, das einen Schub vom Primärteil 20a bzw. 20b auf das Sekundärteil 21a bzw. 21b ausübt.

Wie auch die Figuren 2 bis 4 zeigen, weist der Basiskörper 18 zwei geneigte, sich in Verfahrrichtung X erstreckende Flächen 19a und 19b auf, an welchen die Sekundärteile 21a und 21b angebracht sind. Die Primärteile 20a und 20b sind gegenüberliegend zu den Sekundärteilen 21a und 21b über Befestigungskörpern 22a und 22b am Schlitten 10 befestigt und somit am beweglichen Teil des Schlittenantriebs angebracht, sodass die Primärteile 20a, 20b und Sekundärteile 21a, 21b jeweils einen sogenannten Kurzstator-Linearmotor bilden. Die Linearmotoren 20a und 21a sowie 20b und 21b arbeiten berührungslos, wobei das jeweilige Primärteil 20a bzw. 20b und Sekundärteil 21a bzw. 21b durch einen definierten Luftspalt voneinander getrennt sind, der typischerweise im Millimeterbereich liegt oder weniger als 1 mm beträgt.

Bei der in Figur 1 gezeigten Ausrichtung des Schlittens 10 befinden sich die Führungen 12a, 16a, 12b, 16b in der XY-Ebene. Die Normale zu dieser Ebene (im Folgenden Schlittennormale genannt) ist durch die Z-Richtung gegeben. Die Neigung der Flächen 19a und 19b ist so gewählt, dass der Winkel α zwischen der Schlittennormalen und der Ebene, in welcher das jeweilige Sekundärteil 21a bzw. 21b liegt, im Bereich von 35 bis 55 Grad liegt, vorzugsweise bei α = 45 Grad. Die beiden Ebenen 19a und 19b weisen somit einen Schnittwinkel von 2α auf. Das mit dem jeweiligen Sekundärteil 21a bzw. 21b zusammenwirkende Primärteil 20a bzw. 20b ist ebenfalls um den Winkel α gegenüber der Schlittennormalen geneigt angeordnet.

Während des Betriebs erzeugen die Linearmotoren 20a, 21a, 20b, 21b Wärme, die in geeigneter Weise abzuführen ist, um zu verhindern, dass der Schlitten 10 und der Basisträger 15 einem zusätzlichen Wärmeeintrag und somit Deformationen unterworfen sind. Zur Kühlung enthalten die Primärteile 20a, 20b ein integriertes Kühlungssystem, und die Sekundärteile 21a, 21b sind mit Innenkanälen versehen, durch welche eine Kühlflüssigkeit leitbar ist. Im Weiteren dienen der Basiskörper 18 und die Befestigungskörper 22a, 22b als Kühleinrichtung, wozu sie mit Innenkanälen versehen sind, durch welche die Kühlflüssigkeit geleitet werden kann. Über Anschlüsse 23a, 23b, 24 an den Körpern 22a, 22b bzw. 18 sind Leitungen zum Einleiten der Kühlflüssigkeit in die Innenkanäle anschliessbar. Als Kühlflüssigkeit eignen sich z.B. wasserhaltige Flüssigkeiten mit korrosionsverhindernden Zusätzen, wie sie bei Bearbeitungsmaschinen verwendet werden. Wird die Positionsvorrichtung bei einer Maschine, z.B. Schleifmaschine, verwendet, die bereits einen Kühlkreislauf enthält, so wird die Kühleinrichtung 18, 22a, 22b vorteilhafterweise an diesen Kühlkreislauf angeschlossen.

Zwischen den Linearmotoren 20a, 21a, 20b, 21b ist eine Wegmesseinrichtung 30a und 30b angeordnet, die zum Erfassen der Schlittenposition dient. Der stationäre Teil 30a der Wegmesseinrichtung ist zuoberst auf dem Basiskörper 18 zwischen den beiden geneigten Flächen 19a und 19b angebracht, während der bewegliche Teil 30b der Wegmesseinrichtung am Schlitten 10 befestigt ist. Die Wegmesseinrichtung 30a, 30b ist so gewählt, dass die Schlittenposition vorzugsweise mit einer Genauigkeit im Nanometerbereich bestimmbar ist. Als Wegmesseinrichtung 30a, 30b ist u.a. eine optoelektronische Wegmesseinrichtung geeignet, bei welcher Teilungen auf einem Massstabsystem, z.B. Glasmassstab, optisch erfasst und entsprechende elektrische Wegmesssignale erzeugt werden.

Eine geeignete Regeleinrichtung (nicht dargestellt) ist vorgesehen, welche die Signale der Wegmesseinrichtung 30a, 30b auswertet und Signale an die Linearmotoren 20a, 21a, 20b, 21b liefert, um den Schlitten 10 gemäss der gewünschten Vorgabe zu bewegen.

Zur Bildung von zwei Antriebsachsen ist in einer weiteren Ausführungsform ein zweiter Schlitten mit Linearmotorantrieb und Wegmesseinrichtung vorgesehen, welcher auf dem Schlitten 10 angeordnet ist (in den Figuren nicht dargestellt). Linearmotorantrieb und Wegmesseinrichtung des zweiten Schlittens sind dazu analog aufgebaut wie die entsprechenden Einrichtungen des ersten Schlittens. Um z.B. ein Werkzeug in der Ebene verfahren zu können, brauchen die Verfahrrichtungen der beiden Schlitten nicht unbedingt orthogonal zueinander zu sein, sondern können auch unter einem flachen bzw. spitzen Winkel zueinander angeordnet sein.

Die erfindungsgemässe Positionsvorrichtung ist z.B. bei Schleifmaschinen, insbesondere Rundschleifmaschinen, anwendbar. In typischen Anwendungen kann die zu bewegende Masse mehrere Hundert Kilogramm betragen, typischerweise im Bereich von 500 kg bis 1'500 kg. Mittels der Linearmotoren 20a, 20b, 21a, 21b sind Beschleunigungen bis zu 10 m/s² oder auch mehr sowie Geschwindigkeiten bis 30 m/s erzielbar. Die Positionsgenauigkeit liegt dabei im Submikrometerbereich. Die durch die Kühlungseinrichtung 18, 22a, 22b abgeführte Wärme liegt typischerweise im Bereich von 1 Kilowattstunde oder mehr.

Die soweit beschriebene Positionsvorrichtung hat u.a. folgende Vorteile:

Die geneigte Anordnung der Linearmotoren 20a, 21a, 20b, 21b (im Folgenden auch V-Anordnung genannt) hat den Vorteil, dass die zwischen den Primärteilen 20a, 20b und Sekundärteilen 21a, 21b erzeugten Anzugskräfte in reduziertem Masse auf den Schlitten 10 wirken. Bei α = 45 Grad ist diese Reduktion maximal: die resultierende Anzugskraft, welche in Schlittennormale wirkt, ist um einen Faktor √2 reduziert gegenüber einer Anordnung mit nicht geneigten Linearmotoren (α = 90 Grad). Da die Anzugskräfte in reduziertem Masse auf den Schlitten 10 wirken, können antriebsstärkere Linearmotoren 20a, 21a, 20b, 21b eingesetzt werden und/oder kann der Schlitten 10 leichter gebaut werden, ohne dass dieser Deformationen unterworfen ist.

Im Weiteren können die von den Linearmotoren 20a, 21a, 20b, 21b erzeugten Anzugskräfte dazu benutzt werden, um die hydrostatischen Führungen 12a, 16a, 12b, 16b vorzuspannen, sodass die Führungsteile 12a, 12b mit einer definierten Kraft auf die Führungsschienen wirken 16a, 16b. Dies erlaubt es, lediglich aufliegende Führungen einzusetzen, welche einfacher und kostengünstiger sind als z.B. umgreifende Führungen, wobei auch bei kleiner oder veränderlicher auf den Schlitten wirkenden Gewichtskraft, die nötige Vorspannung vorhanden ist.

Die Verwendung einer V-Anordnung der Linearmotoren in Kombination mit flüssigkeitsgelagerten Gleitführungen führt insgesamt zu einer Positioniervorrichtung, deren Schlitten, berührungslos, hochpräzise und schnell verschiebbar ist, wobei auch bei kleinen Verfahrwegen eine nahezu ruckfreie Bewegung gewährleistet ist.

Im Weiteren ist durch die V-Anordnung der Linearmotoren 20a, 21a, 20b, 21b bei gegebener Aufbauhöhe der Positioniervorrichtung genügend Platz geschaffen, um die Kühleinrichtung 18, 22a, 22b relativ gross und somit effektiv dimensionieren zu können. Die Zweiteilung des Linearmotorantriebs erleichtert ebenfalls das Abführen der von ihm produzierten Wärme.

Die Kühleinrichtung aus Basiskörper 18 und Befestigungskörpern 22a, 22b dient als wirksame Wärmebarriere, um den Wärmeeintrag in den Basisträger 15 und Schlitten 10 zu verhindern bzw. so zu regulieren, dass diese eine konstante Temperatur aufweisen. Dadurch sind während des Betriebes Schwankungen in den Dimensionen des Schlittens 10 und des Basisträgers 15 unterbunden, sodass immerzu rasche und hochpräzise Schlittenbewegungen möglich sind.

Die V-Anordnung erlaubt es auch, die Wegmesseinrichtung 30a, 30b zwischen den Linearmotoren 20a, 20b, 21a, 21b anzuordnen, wodurch sich eine kompakte, symmetrische Anordnung ergibt. Diese gewährleistet eine gute Regelbarkeit der Schlittenposition auch bei hochdynamischen Anwendungen, bei welchen der Schlitten 10 grossen Geschwindigkeiten und Beschleunigungen unterworfen ist, da u.a. bei einer Richtungsumkehr des Schlittens der Winkelfehler in der Positionserfassung gering ist.

## Patentansprüche

1. Positioniervorrichtung, welche folgende Komponenten umfasst:
mindestens einen verfahrbaren Schlitten (10);
flüssigkeitsgelagerte Gleitführungen (12a, 16a; 12b, 16b), auf welchen der Schlitten verfahrbar ist und welche Führungsschienen (16a, 16b) sowie Führungsteile (12a, 12b) umfassen, die auf den Führungsschienen aufliegen, und
einen Schlittenantrieb enthaltend
einen ersten Linearmotor mit einem Primärteil (20a) und einem diesem gegenüberliegenden Sekundärteil (21a), das sich in einer ersten Ebene (19a) befindet, **dadurch gekennzeichnet, dass** der Schlittenantrieb
mindestens einen zweiten Linearmotor mit einem weiteren Primärteil (20b) und einem weiteren, diesem gegenüberliegenden Sekundärteil (21b), das sich in einer zweiten Ebene (19b) befindet, enthält, wobei
die beiden Linearmotoren geneigt angeordnet sind, sodass die beiden Ebenen (19a, 19b) verschieden sind und einen Schnittwinkel (2α) aufweisen.

2. Positioniervorrichtung nach Anspruch 1, wobei die Gleitführungen (12a, 16a; 12b, 16b) hydrostatische oder hydrodynamische Führungen sind.

3. Positioniervorrichtung nach Anspruch 1 oder 2, wobei der Schlitten (10) eine Grundplatte (11) enthält, aus deren Unterseite die Führungsteile (12a, 12b) herausragen.

4. Positioniervorrichtung nach einem der Ansprüche 1 bis 3, wobei die Gleitführungen (12a, 16a; 12b; 16b) zwei im Wesentlichen parallel angeordnete Führungen bilden, zwischen welchen die beiden Linearmotoren (20a, 21a; 20b, 21b) angeordnet sind.

5. Positioniervorrichtung nach einem der Ansprüche 1 bis 4, wobei sie eine Kühleinrichtung (18, 22a, 22b) zum Kühlen der Primär- (20a, 20b) und Sekundärteile (21a, 21b) umfasst.

6. Positioniervorrichtung nach Anspruch 5, wobei die Kühleinrichtung
einen Basiskörper (18) umfasst, an welchem die Sekundärteile (21a, 21b) befestigt sind, sowie
Befestigungskörper (22a, 22b), über welche die Primärteile (20a, 20b) am Schlitten (10) befestigt sind, wobei die Körper (18, 22a, 22b) Innenkanäle aufweisen zur Aufnahme von Kühlflüssigkeit.

7. Positioniervorrichtung nach einem der Ansprüche 1 bis 6, wobei eine Wegmesseinrichtung (30a, 30b) zum Erfassen der Schlittenposition zwischen den Linearmotoren (20a, 21a; 20b, 21b) angeordnet ist.

8. Positioniervorrichtung nach einem der Ansprüche 1 bis 7, wobei der Schnittwinkel (2α) zwischen den Ebenen (19a, 19b) im Bereich von 70 Grad bis 110 Grad liegt und vorzugsweise 90 Grad beträgt.

9. Positioniervorrichtung nach einem der Ansprüche 1 bis 8, wobei ein zweiter Schlitten auf dem ersten Schlitten (10) angeordnet ist.

10. Schleifmaschine, insbesondere Rundschleifmaschine, mit einer Positioniervorrichtung nach einem der Ansprüche 1 bis 9.

## Claims

1. Positioning device comprising the following components:
at least one displaceable carriage (10);
liquid slide bearings (12a, 16a; 12b, 16b) on which the carriage is displaceable and which comprise guide rails (16a, 16b) as well as guide members (12a, 12b) lying on the guide rails, and
a carriage drive comprising
a first linear motor having a primary part (20a) and a secondary part (21a) that is opposite to the primary part and located in a first plane (19a),
**characterised in that** the carriage drive
comprises at least a second linear motor having another primary part (20b) and another secondary part (21b) that is opposed to the primary part and located in a second plane (19b),
the two linear motors being arranged in inclined positions such that the two planes (19a, 19b) are different and form an intersecting angle (2α).

2. Positioning device according to claim 1, wherein the slide bearings (12a, 16a; 12b, 16b) are hydrostatic or hydrodynamic guides.

3. Positioning device according to claim 1 or 2, wherein the carriage (10) comprises a base plate (11) from the underside of which the guide members (12a, 12b) project.

4. Positioning device according to one of claims 1 to 3, wherein the slide bearings (12a, 16a; 12b, 16b) form two guides that are arranged essentially in parallel and between which the two linear motors (20a, 21a; 20b, 21b) are arranged.

5. Positioning device according to one of claims 1 to 4, wherein it comprises a cooling device (18, 22a, 22b) for cooling the primary parts (20a, 20b) and the secondary parts (21a, 21b).

6. Positioning device according to claim 5, wherein the cooling device
comprises a supporting body (18) on which the secondary parts (21a, 21b) are mounted, as well as
mounting bodies (22a, 22b) by means of which the primary parts (20a, 20b) are secured to the carriage (10), the bodies (18, 22a, 22b) being provided with internal channels for receiving a coolant.

7. Positioning device according to one of claims 1 to 6, wherein a displacement measuring system (30a, 30b) for detecting the carriage position is disposed between the linear motors (20a, 21a; 20b, 21b).

8. Positioning device according to one of claims 1 to 7, wherein the intersecting angle (2α) between the planes (19a, 19b) is comprised in the range of 70 degrees to 110 degrees and is preferably equal to 90 degrees.

9. Positioning device according to one of claims 1 to 8, wherein a second carriage is arranged on the first carriage (10) .

10. Grinding machine, more particularly a circular grinding machine, comprising a positioning device according to one of claims 1 to 9.

## Revendications

1. Dispositif de positionnement comprenant les composants suivants:
au moins un chariot (10) déplaçable;
des glissières à palier liquide (12a, 16a; 12b, 16b) sur lesquelles le chariot est déplaçable et qui comprennent des rails de guidage (16a, 16b) et des éléments de guidage (12a, 12b) s'appuyant sur les rails de guidage, et
un entraînement du chariot comprenant
un premier moteur linéaire avec une partie primaire (20a) et une partie secondaire (21a) opposée à celle-ci et agencée dans un premier plan (19a),
**caractérisé en ce que** l'entraînement du chariot
comprend au moins un deuxième moteur linéaire avec une autre partie primaire (20b) et une autre partie secondaire (21b) opposée à celle-ci et agencée dans un deuxième plan (19b),
les deux moteurs linéaires étant agencés en positions inclinées de telle manière que les deux plans (19a, 19b) sont différents et présentent un angle d'intersection (2α).

2. Dispositif de positionnement selon la revendication 1, où les glissières (12a, 16a; 12b, 16b) sont des guidages hydrostatiques ou hydrodynamiques.

3. Dispositif de positionnement selon la revendication 1 ou 2, où le chariot (10) comprend une plaque de base (11) du côté inférieur de laquelle les éléments de guidage (12a, 12b) font saillie.

4. Dispositif de positionnement selon l'une des revendications 1 à 3, où les glissières (12a, 16a; 12b, 16b) forment deux guidages agencés essentiellement en parallèle, entre lesquels les deux moteurs linéaires (20a, 21a; 20b, 21b) sont agencés.

5. Dispositif de positionnement selon l'une des revendications 1 à 4, où il comprend un dispositif de refroidissement (18, 22a, 22b) pour refroidir les parties primaires (20a, 20b) et les parties secondaires (21a, 21b).

6. Dispositif de positionnement selon la revendication 5, où le dispositif de refroidissement
comprend un corps de base (18) sur lequel les parties secondaires (21a, 21b) sont montées, ainsi que
des corps de fixation (22a, 22b) par l'intermédiaire desquels les parties primaires (20a, 20b) sont fixées au chariot (10), lesdits corps (18, 22a, 22b) présentant des canaux intérieurs pour recevoir un liquide de refroidissement.

7. Dispositif de positionnement selon l'une des revendications 1 à 6, où un système de mesure de déplacement (30a, 30b) pour détecter la position du chariot est agencé entre les moteurs linéaires (20a, 21a; 20b, 21b).

8. Dispositif de positionnement selon l'une des revendications 1 à 7, où l'angle d'intersection (2α) entre les plans (19a, 19b) est dans la plage de 70 degrés à 110 degrés et est préférablement égal à 90 degrés.

9. Dispositif de positionnement selon l'une des revendications 1 à 8, où un deuxième chariot est agencé sur le premier chariot (10).

10. Rectifieuse, plus particulièrement une rectifieuse cylindrique, comprenant un dispositif de positionnement selon l'une des revendications 1 à 9.
